# EUROPÄISCHE PATENTSCHRIFT

(11) **EP 2 191 711 B1**
(45) Veröffentlichungstag und Bekanntmachung des Hinweises auf die Patenterteilung: **25.01.2012**
(21) Anmeldenummer: 09176784.8
(22) Anmeldetag: 23.11.2009
(51) Int. Cl.: A01D 78/06

(54) **Anbaubarer Bandrechen für den Gebirgseinsatz**
Tractor mounted side-delivery hay rake for mountain use
Râteau de bande pouvant être monté pour l'utilisation en montagne

(30) Priorität: 26.11.2008 CH 18412008
(43) Veröffentlichungstag der Anmeldung: 02.06.2010
(73) Patentinhaber: Brielmaier, Martin, 88048 Friedrichshafen (DE)
(72) Erfinder: Walser, Beat, 7212, Seewis Dorf (CH); Hartmann, Anton, 7240, Küblis (CH)
(74) Vertreter: Arat, Dogan

(56) Entgegenhaltungen:
- DE-A1-102005 004 407
- DE-B- 1 001 039

## Beschreibung

Die vorliegende Erfindung betrifft einen anbaubaren Bandrechen für den Gebirgseinsatz mit einem Tragrahmen und damit verbundenen Bodenabstützelementen, wobei mindestens zwei Paar Riemenscheiben vorhanden sind, auf denen zwei parallel synchron laufende Riemen angebracht sind, die mit Zinken tragenden Stäben versehen sind.

Zum Verständnis der vorliegenden Erfindung sei nachfolgend das Heuen an steilen Berghängen beschrieben. Meist wird das Gras an steilen Berghängen morgens mit einem Einachsmäher geschnitten, während des Tages ein- oder mehrmals gewendet und abends zusammen gerecht und mit einem Ladewagen aufgenommen und wegtransportiert. In der Ebene wird das Heu mit einem so genannten Kreiselschwader oder einem Bandrechen zu Mahden zusammen gerecht und der Ladewagen fährt über diese Mahden und nimmt das Heu auf. Meist erübrigt sich heutzutage ein Nachrechen des Feldes.

An steilen Berghängen können jedoch Ladewagen nicht überall eingesetzt werden. Daher wurde bis heute meist das getrocknete Heu des gesamten Berghanges zu einer grossen Mahd unten am Hang im Bereich eines Flurweges oder im Bereich eines Gebietes mit geringem Gefälle zusammen gerecht und hier mittels dem Ladewagen aufgenommen, wenn möglich, oder von Hand aufgeladen. Ein Zusammenrechen des getrockneten Heus an solchen steilen Berghängen war bis heute maschinell nicht möglich. Zwar kann man mit einem Einachsenmäher an solchen Steilhängen quer zur Hanglage fahren, doch Anbaugeräte an solchen Einachsenmähmaschinen mit denen das Heu zusammen gerecht werden kann sind bis heute nicht bekannt.

Bandrechen an sich sind jedoch schon lange bekannt. Die ersten Modelle haben dabei mit kettenartigen Systemen gearbeitet, wie beispielsweise aus den Dokumenten DE-A-1482806 oder DE-A-1556058 bekannt. Erst bei neueren Systemen sind statt kettenartigen Bandrechensystemen Bandrechen bekannt geworden, die mit Riemen arbeiten. Hierbei verlaufen jeweils zwei Riemen parallel zueinander und zwischen den beiden parallel und synchron laufenden Riemen sind Zinken tragende Stäbe vorhanden, die an den Riemen entsprechend beweglich gehalten sind. Aus der DE-A-102005004407 ist ein anbaubarer Bandrechen gemäss Oberbegriff des Patentanspruches bekannt. Für den zuvor genannten Einsatz ist jedoch diese Ausführungsform nicht geeignet. Zwar liesse sich ein Bandrechen der hier dargestellten Art vermutlich auch so anpassen, dass er an einer Einachsenmähmaschine anbaubar wäre und man somit quer zur Hanglage fahren könnte. Da jedoch bereits bei der zweiten oder dritten Querfahrt zur Hanglage die bereits zusammen gerechte Mahd so hoch ist, dass das Heu sich nur nach vorne am Tragrahmen stauen würde, lässt sich somit der hier dargestellte Bandrechen im Gebirgseinsatz nicht verwenden.

Es ist daher die Aufgabe der vorliegenden Erfindung einen anbaubaren Bandrechen gemäss dem Oberbegriff des Patentanspruches zu schaffen, der auch für den Gebirgseinsatz an steilen Hanglagen geeignet ist, um die zuvor beschriebene Arbeitsweise zu ermöglichen.

Diese Aufgabe löst ein anbaubarer Bandrechen, der eingangs genannten Art, der sich dadurch auszeichnet, dass der Tragrahmen einen zur Bearbeitungsfläche parallelen Rechenbereich und daran anschliessend einen von diesem Bereich schräg nach oben gerichteten Förderbereich aufweist, und dass an dem vom Rechenbereich am entfernten Ende des Förderbereiches ein drittes Paar Riemenscheiben vorhanden ist, so dass die Zinken tragenden Stäbe zweifach gebogen senkrecht zur Verlaufsrichtung der Riemen über alle drei Riemen hinweg verlaufend angeordnet sind.

Dank diesem nach oben gerichteten Förderbereich lassen sich die oberen Schichten der bereits vorhandenen Mahd seitlich nach unten befördern, während im Rechenbereich die untere Lage des Heues hangabwärts gerecht wird. Prinzipiell muss selbstverständlich mindestens eine der sechs Riemenscheiben angetrieben sein. Es kann auch eine Welle angetrieben sein auf der zwei Riemenscheiben angeordnet sind. Dies ist jedoch besonders vorteilhaft, falls man den Antrieb mittels eines Hydraulikmotors verwirklicht. Es ist mechanisch mit dem geringsten Aufwand verbunden und moderne Einachsmäher besitzen einen Hydraulikmotor der zum Antrieb verschiedenster Anbauten, insbesondere auch eines Mähbalkens, geeignet ist. Die Verwendung des hydraulischen Antriebes lässt auch in einfacher Weise eine Umkehr der Drehrichtung zu. Da bei der Arbeit immer quer zur Hanglage gearbeitet wird, dabei aber nicht vorwärts und rückwärts gefahren werden kann, sondern das frontal angebaute Gerät immer vorne sein muss, muss zwangsweise die Antriebsrichtung bei jeder Fahrt quer zur Hangsrichtung gewechselt werden. Deshalb ist es ebenfalls von Vorteil, wenn man die Zinken an den Zinken tragenden Stäben so anordnet, dass diese exakt senkrecht zur Förderrichtung verlaufen. Ueblicherweise haben jedoch Bandrechen die Zinken so angeordnet, dass diese mit einer gewissen Vorlaufneigung ausgerichtet sind. Würde bei einem solchen Bandrechen die Antriebsrichtung geändert, wäre ein sauberes Arbeiten nicht möglich.

Weitere vorteilhafte Ausgestaltungsformen des Erfindungsgegenstandes gehen aus den weiteren abhängigen Ansprüchen hervor, und deren Bedeutung und Wirkungsweise sind in der nachfolgenden Beschreibung mit Bezug auf die anliegende Zeichnung erläutert.

In der Zeichnung ist ein bevorzugtes Ausführungsbeispiel des Erfindungsgegenstandes dargestellt und nachfolgend ausführlich erklärt. Es zeigt:
- Figur 1: eine perspektivische Gesamtansicht des Bandrechens;
- Figur 2: den Tragrahmen des Bandrechens für sich allein in perspektivischer Darstellung und
- Figur 3: einen Zinken tragenden Stab des Bandrechens in der Seitenansicht;
- Figur 4: eine perspektivische Darstellung einer Lagergabel zur Lagerung einer Riemenscheibe.

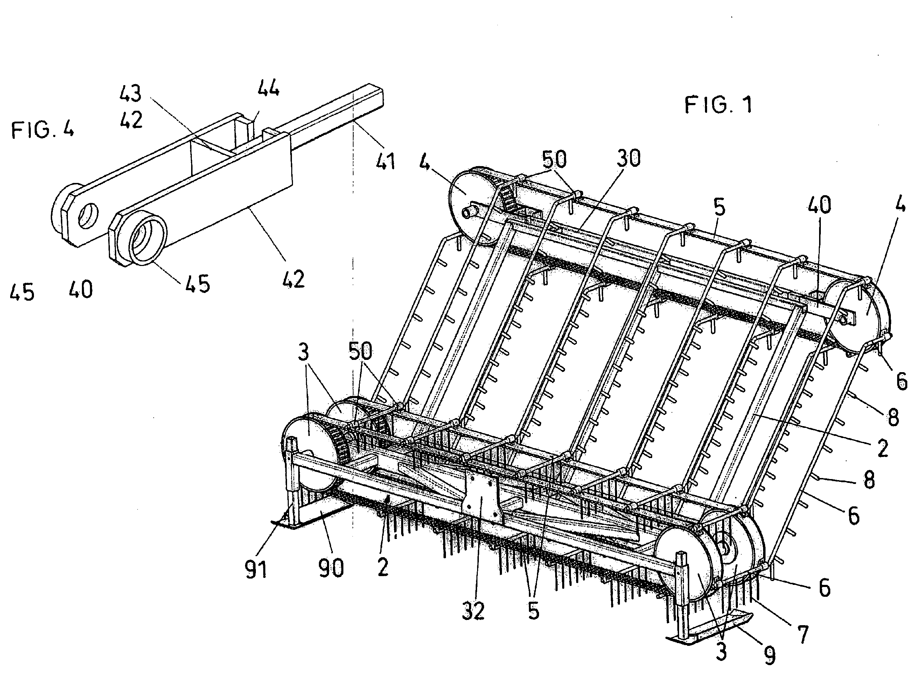

Vorerst werden mit Bezug auf die Figur 1 die Hauptbestandteile des gesamthaft mit 1 bezeichneten Bandrechens erläutert. Der Bandrechen 1 besitzt als Grundgerippe einen Tragrahmen 2. Dieser Tragrahmen 2 trägt zwei Wellen oder Achsen auf denen zwei Paar Riemenscheiben gehalten sind. Ueber diese Riemenscheiben 3 laufen zwei parallel zueinander verlaufende Riemen 5, die vorzugsweise als Zahnriemen gestaltet sind. Auf der äusseren umlaufenden Fläche der Riemen 5 sind Zinken tragende Stäbe 6 beweglich gelagert. Diese Zinken tragenden Stäbe 6 besitzen in einem Rechenbereich lange Zinken 7 und in einem Förderbereich kurze Zinken 8. Ferner sind am Tragrahmen 2 Bodenstützelemente 9 höhenverstellbar und arretierbar befestigt.

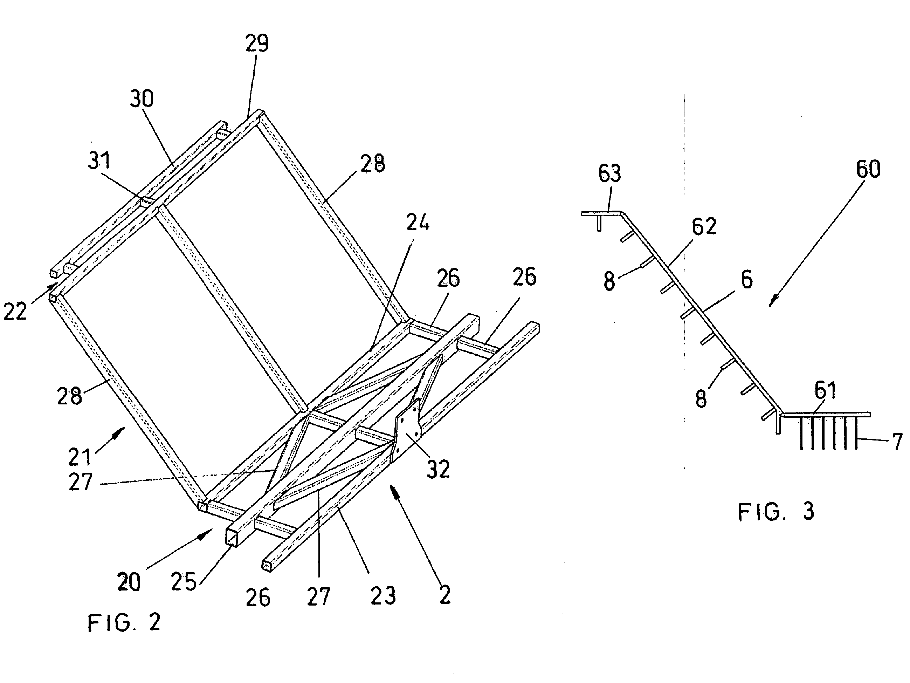

Der Tragrahmen 2 ist in der Figur 2 im Detail dargestellt. Der Tragrahmen 2 weist zwei zueinander abgewinkelte Bereiche 20, 21 auf. Ein erster Bereich 20 wird als Rechenbereich bezeichnet. Der geneigt zu diesem Rechenbereich verlaufende Teil des Tragrahmens wird Förderbereich 21 des Tragrahmens 2 genannt. Praktisch besteht am oberen Ende des Förderbereiches 21 noch ein dritter, abgekröpfter Bereich 22 des Tragrahmens 2. In diesem abgekröpften, dritten Bereich 22 sind obere Riemenscheiben 4 vorhanden, die zum Förderbereich gehören. Ueber diese oberen Riemenscheiben 4 läuft ebenfalls ein Riemen 5, der wiederum als Zahnriemen ausgebildet sein kann, der vorzugsweise über eine Welle angetrieben wird.

Der Rechenbereich 20 des Tragrahmens 2 weist drei parallele Längsholmen auf. Zuvorderst ist ein anbauseitiger Holmen 23 vorgesehen. Auf der gegenüberliegenden Seite ist der parallel verlaufende winkelseitige Holmen 24 vorhanden. Der Abstand zwischen den anbauseitigen und den winkelseitigen Holmen 23, 24 bildet die Tiefe des Rechenbereiches 20 des Tragrahmens 2. Zwischen den beiden Holmen 23 und 24 verläuft ein Mittelholm 25. Zwischen den drei erwähnten Holmen sind drei Querholmen 26 geschweisst sowie mehrere schräg verlaufende

Versteifungsstreben 27. Alle vorgenannten Holmen 23 - 26 sowie die Versteifungsstreben 27 liegen in einer Ebene und bilden zusammen den Rechenbereich 20 des Tragrahmens 2. Am winkelseitigen Holmen 24 sind praktisch in Fortsetzung der Querholme 26 drei geneigte Streben 28 angeordnet. Die Neigung dieser geneigten Streben 28 beträgt zwischen 30 und 50 Grad bezogen zur Ebene, welche vom Rechenbereich 20 des Tragrahmens 2 gebildet ist. Die geneigten Streben 28 sind miteinander verbunden durch einen Oberholmen 29. Der winkelseitige Holmen 24 sowie der Oberholmen 29, und die beiden äussersten geneigten Streben 28 spannen gemeinsam den Förderbereich 21 des Tragrahmens 2 auf. Schliesslich wird der bereits erwähnte dritte, abgekröpfte Bereich des Tragrahmens 2 vom Oberholmen 29 und einem parallel dazu verlaufenden in kurzem Abstand dazu angeordneten Halteholmen 30 gebildet, wobei zwischen dem Halteholmen 30 und dem Oberholmen 29 mehrere Querstützen 31 eingeschweisst sind.

Bevorzugterweise wird der gesamte Tragrahmen 2 aus lauter Rechteckprofilen zusammengebaut. Entsprechend lässt sich am anbauseitigen Holmen 23 eine Anbauplatte 32 anschweissen, die senkrecht zur Ebene verläuft, die vom anbauseitigen Holmen 23 und dem winkelseitigen Holmen 24 aufgespannt wird. Die Anbauplatte 32 kann entweder direkt mit einer Gegenplatte am Einachsmäher angeschraubt sein oder an dieser Anbauplatte 32 können entsprechende Kupplungsmittel angebracht sein.

In der Figur 3 ist der Zinken tragende Stab 6 für sich allein dargestellt. Dieser Stab 6 zusammen mit den Zinken 7 und 8 bildet einen Rechenstab 60. Dieser Rechenstab 60 hat einen horizontalen Rechenabschnitt 61, an dem die langen Zinken 7 des Rechenbereiches angebracht sind. Der geneigte Rechenabschnitt 62 hingegen ist mit kürzeren Zinken 8 versehen. Dieser geneigte Rechenabschnitt 62 liegt im Förderbereich. Hier wird die bereits gebildete Mahd weiter den Hang abwärts gefördert und aus dem Bereich des anbaubaren Bandrechens. Zuoberst befindet sich der abgekröpfte Rechenabschnitt 63. Dieser ist noch mit einem einzigen Zinken versehen, der ebenfalls mit 8 bezeichnet ist, da er die gleiche Länge und Gestaltung aufweist wie die kurzen Zinken 8 am geneigten Rechenabschnitt 62. Die kurzen Zinken 8 können wie in der Zeichnung dargestellt senkrecht zur Verlaufsrichtung des Stabes sein oder sie können alle parallel zu den langen.Zinken 7 verlaufend sein.

Auf den drei Riemen beziehungsweise Zahnriemen 5 sind auf der äusseren Fläche Gleithülsen 50 in regelmässigen Abständen befestigt. Jeder Stab 6 ist somit in drei Gleithülsen 50 gelagert, wobei sich je eine Gleithülse 50 auf je einem der drei Riemen 5 befindet. Dank dieser Führung verbleiben die Zinken tragenden Stäbe zueinander immer parallel und die Ausrichtung der Zinken 7 und 8 verändert sich nicht. Die langen Zinken 7 im Rechenbereich bleiben folglich immer vertikal und daher ist deren Länge auf etwas weniger als den halben Durchmesser der Riemenscheiben 3 beschränkt.

Die Bodenstützelemente 9 sind bevorzugterweise als Gleitschuhe 90 gestaltet. Sie sind an vertikalen Stützen 91 befestigt die höhenverstellbar sind. Die Stützen 91 können folglich zusammen mit den Gleitschuhen 90 vollständig entfernt und durch entsprechende Stützen 91, die mit Laufrädern versehen sind, ausgewechselt werden. Dies kann beispielsweise für den Anfahrtsweg auf einer Strasse zum Einsatz kommen, um den Transport des Bandrechens zum Einsatzort zu erleichtern.

Im Halteholm 30 sind beidseitig verstellbar gehaltene und arretierbare Lagergabeln 40 eingesetzt, von denen eine in der Figur 4 für sich allein perspektivisch dargestellt ist. Die Lagergabel 40 hat einen Lagerzapfen 41 dessen äussere Querschnittsform der inneren Querschnittsform des Lagerholms 30 entspricht und somit in diesem verstellbar gehalten ist um beispielsweise mittels einer Mahdenschraube an der korrekten Position arretierbar ist. Die eigentliche Lagergabel weist zwei Gabelwangen 42 auf, die über zwei Querplatten 43 und 44 miteinander verbunden sind. Die innen liegende Querplatte 43 ist mit der Stirnseite des Lagerzapfens 41 verschweisst, während die äussere Querplatte 44 eine Ausnehmung aufweist, durch die der Lagerzapfen 41 durchgeführt ist. Jede Gabelwange 42 besitzt ein Achslager 45 wobei diese beiden Achslager 45 miteinander fluchten, so dass die Achse oder Welle der hier gelagerten Riemenscheibe entsprechend gelagert ist.

In ähnlicher Weise, jedoch in der Zeichnung nicht erkennbar, kann auch der Mittelholm 25 mit einer Lagergabel versehen sein, die ein Wellenlager trägt, durch welche eine Welle beziehungsweise Achse hindurch läuft, auf die beidseitig je eine Riemenscheibe lagert, so dass auch die beiden Riemen im Rechenbereich spannbar sind.

### Bezugszeichenliste:

- 1: Bandrechen
- 2: Tragrahmen
- 3: Riemenscheiben im Rechenbereich (2 Paar)
- 4: Riemenscheiben im Förderbereich (1 Paar)
- 5: Riemen
- 6: Zinken tragende Stäbe
- 7: Zinken im Rechenbereich
- 8: Zinken im Förderbereich
- 9: Bodenabstützelement
- 20: Rechenbereich des Tragrahmens
- 21: Förderbereich des Tragrahmens
- 22: abgekröpfter Bereich des Tragrahmens
- 23: anbauseitiger Holmen
- 24: winkelseitiger Holmen
- 25: Mittelholmen
- 26: Querholmen
- 27: Versteifungsstreben
- 28: geneigte Streben
- 29: Oberholmen
- 30: Halteholmen
- 31: Querstützen
- 32: Anbauplatte
- 40: Lagergabel
- 41: Lagerzapfen
- 42: Gabelwangen
- 43: Querplatte
- 44: Querplatte
- 45: Achslager
- 50: Gleithülsen
- 60: Rechenstab
- 61: horizontaler Rechenabschnitt
- 62: geneigter Rechenabschnitt
- 63: abgekröpfter Rechenabschnitt
- 90: Gleitschuh
- 91: Stützen

## Patentansprüche

1. Anbaubare Bandrechen (1) für den Gebirgseinsatz, mit einem Tragrahmen (2) und damit verbundenen Bodenabstützelementen (9), wobei mindestens zwei Paar Riemenscheiben (3) vorhanden sind, auf denen zwei parallel synchron laufende Riemen (5) angebracht sind, die mit Zinken tragenden Stäben (6) versehen sind, ein drittes Paar Riemenscheiben (4) vorhanden ist, so dass die Zinken tragenden Stäbe (6) zweifach gebogen senkrecht zur Verlaufsrichtung der Riemen (5) über alle drei Riemen (5) hinweg verlaufend angeordnet sind,
der Tragrahmen (2) einen zur
Bearbeitungsfläche parallel verlaufenden Rechenbereich aufweist, **dadurch gekennzeichnet, dass** der Tragrahmen daran anschliessend einen von diesem Bereich
schräg nach oben gerichteten Förderbereich (21) aufweist, und dass an dem vom Rechenbereich (20) entfernten Ende des Förderbereiches (21)
das dritte Paar Riemenscheiben
angeordnet ist.

2. Anbaubarer Bandrechen (1) nach Anspruch 1, **dadurch gekennzeichnet, dass** die Zinken tragenden Stäbe (6) in Gleithülsen (50) drehbar gelagert sind, die auf allen drei Riemen (5) auf deren Aussenflächen fest angeordnet sind und die Gleithülsen (50) quer zur Längsrichtung der Riemen (5) verlaufen.

3. Anbaubarer Bandrechen (1) nach Anspruch 1, **dadurch gekennzeichnet, dass** die Zinken im Rechbereich (7) länger sind als die Zinken im Förderbereich (8).

4. Anbaubarer Bandrechen (1) nach Anspruch 1, **dadurch gekennzeichnet, dass** mindestens eine der sechs Riemenscheiben (3, 4) angetrieben ist.

5. Anbaubarer Bandrechen (1) nach Anspruch 4, **dadurch gekennzeichnet, dass** der Antrieb mittels eines Hydraulikmotors erfolgt.

6. Anbaubarer Bandrechen (1) nach Anspruch 1, **dadurch gekennzeichnet, dass** die Länge der Zinken (7,8) geringer ist als der Radius der Riemenscheiben (3,4) ist.

7. Anbaubarer Bandrechen (1) nach Anspruch 1, **dadurch gekennzeichnet, dass** die Bodenabstützelemente (9) höhenverstellbare Gleitschuhe (90) sind.

8. Anbaubarer Bandrechen (1) nach Anspruch 1, **dadurch gekennzeichnet, dass** am Tragrahmen (2) eine Anbauplatte (32) angeschweisst ist.

9. Anbaubarer Bandrechen (1) nach Anspruch 1, **dadurch gekennzeichnet, dass** mindestens eine Riemenscheibe (3,4) an dem vom Rechenbereich (20) entfernten Ende des Förderbereiches (21) in einer Lagergabel (40) gehalten ist, die im Tragrahmen (2) verschiebbar und arretierbar gehalten ist, um ein Spannen oder Lösen des Riemens (5) zu ermöglichen.

10. Anbaubarer Bandrechen (1) nach Anspruch 1, **dadurch gekennzeichnet, dass** mindestens an einer Seite eine verschiebbare Achse vorhanden ist, auf der zwei Riemenscheiben (3,4) von je einem der beiden Riemen (5), die im Rechenbereich (20) verlaufen, lagern.

## Claims

1. Mountable belt rake (1) for mountain use, with a carrier frame (2) and associated members (9) for resting on the ground, there being provided at least two pairs of belt pulleys (3) having, mounted thereon, two belts (5) which run in a parallel and synchronized manner and which are provided with tine-carrying bars (6), a third pair of belt pulleys (4) being present, so that the tine-carrying bars (6) are arranged, bent twofold, extending across all three belts (5), perpendicular to the direction of extension of the belts (5), the carrier frame (2) having a raking area extending parallel to the working surface, **characterized in that** the carrier frame has, adjacent thereto, a conveying area (21) directed obliquely upwards from this area and that the third pair of belt pulleys is arranged on the end of the conveying area (21) distant from the raking area (20).

2. Mountable belt rake (1) according to Claim 1, **characterized in that** the tine-carrying bars (6) are rotatably mounted in sliding sleeves (50) which are firmly arranged on the outer surfaces of all three belts (5) and the sliding sleeves (50) extend transversely with respect to the longitudinal direction of the belts (5).

3. Mountable belt rake (1) according to Claim 1, **characterized in that** the tines in the raking area (7) are longer than the tines in the conveying area (8).

4. Mountable belt rake (1) according to Claim 1, **characterized in that** at least one of the six belt pulleys (3, 4) is driven.

5. Mountable belt rake (1) according to Claim 4, **characterized in that** driving is performed by means of a hydraulic motor.

6. Mountable belt rake (1) according to Claim 1, **characterized in that** the length of the tines (7, 8) is smaller than the radius of the belt pulleys (3, 4).

7. Mountable belt rake (1) according to Claim 1, **characterized in that** the members (9) for resting on the ground are sliding shoes (90) which are adjustable heightwise.

8. Mountable belt rake (1) according to Claim 1, **characterized in that** a mounting plate (32) is welded onto the carrier frame (2).

9. Mountable belt rake (1) according to Claim 1, **characterized in that** at least one belt pulley (3,4) is held on the end of the conveying area (21) distant from the raking area (20) in a bearing fork (40) which is held in the carrier frame (2) in a displaceable and lockable manner in order to allow tightening or loosening of the belt (5).

10. Mountable belt rake (1) according to Claim 1, **characterized in that** a displaceable spindle is provided at least on one side, said spindle having, mounted thereon, two belt pulleys (3,4) of each one of the two belts (5) which extend in the raking area (20).

## Revendications

1. Râteau de bande (1) pouvant être monté pour utilisation en montagne, avec un cadre-support (2) et des éléments d'appui sur le sol (9) y connectés, dans lequel sont présentes au moins deux paires de poulies (3) sur lesquelles sont placées deux courroies (5) se déplaçant en parallèle et de manière synchrone, lesquelles sont pourvues de barres (6) portant des dents, dans lequel est présente une troisième paire de poulies (4), de sone que les barres (6) portant des dents soient disposées en s'étendant à double courbure par-dessus les trois courroies (5), perpendiculairement au sens de déplacement des courroies (5), dans lequel le cadre-support (2) présente une zone de râteau s'étendant parallèle à la face de traitement, **caractérisé par le fait que** le cadre-suppoit présente, s'y raccordant, une zone de refoulement (21) orientée obliquement vers le haut à partir de cette zone et qu'à l'extrémité de la zone de refoulement (21) éloignée de la zone de râteau (20) est disposée la troisième paire de poulies.

2. Râteau de bande (1) pouvant être monté selon la revendication 1, **caractérisé par le fait que** les barres (6) portant des dents sont montées de manière rotative dans des manchons coulissants (50) qui sont fixes sur les trois courroies (5), sur les faces extérieures de ces dernières, et que les manchons coulissants (50) s'étendent transversalement au sens longitudinal des courroies (5).

3. Râteau de bande (1) pouvant être monté selon la revendication 1, **caractérisé par le fait que** les dents dans la zone de râteau (7) sont plus longues que les dents dans la zone de refoulement (8).

4. Râteau de bande (1) pouvant être monté selon la revendication 1, **caractérisé par le fait qu'**au moins l'une des six poulies (3, 4) est entraînée.

5. Râteau de bande (1) pouvant être monté selon la revendication 4, **caractérisé par le fait que** l'entraînement a lieu au moyen d'un moteur hydraulique.

6. Râteau de bande (1) pouvant être monté selon la revendication 1, **caractérisé par le fait que** la longueur des dents (7, 8) est inférieure au rayon des poulies (3, 4).

7. Râteau de bande (1) pouvant être monté selon la revendication 1, **caractérisé par le fait que** les éléments d'appui sur le sol (9) sont des sabots (90) réglables en hauteur,

8. Râteau de bande (1) pouvant être monté selon la revendication 1, **caractérisé par le fait qu'**au cadre-support (2) est soudée une plaque d'encrage (32).

9. Râteau de bande (1) pouvant être monté selon la revendication 1, **caractérisé par le fait qu'**au moins une poulie (3, 4) est maintenue, à l'extrémité de la zone de refoulement (21) éloignée de la zone de râteau (20), dans une fourche de montage (40) qui est maintenue de manière déplaçable et arrêtable dans le cadre-support (2), pour permettre une tension ou détente de la courroie (5).

10. 0. Râteau de bande (1) pouvant être monté selon la revendication 1, **caractérisé par le fait qu'**au moins d'un côté est présent un axe déplaçable sur lequel sont montées deux poulies (3, 4) de chacune des deux courroies (5) qui s'étendent dans la zone de râteau (20).
